# FASCICULE DE BREVET EUROPEEN

(11) **EP 1 383 299 B1**
(45) Date de publication et mention de la délivrance du brevet: **12.09.2007**
(21) Numéro de dépôt: 03291789.0
(22) Date de dépôt: 18.07.2003
(51) Int. Cl.: H04M 3/42

(54) **Procédé de mise en relation de membres d'un groupe d'utilisateurs de terminaux communicants et dispositif associé**
Verfahren und Vorrichtung zur Verbindung von Teilnehmern einer Gruppe von Kommunikationsendgerätebenutzern
Method and device for connecting members of a group of users of communication terminals

(30) Priorité: 19.07.2002 FR 0209200
(43) Date de publication de la demande: 21.01.2004
(73) Titulaire: FRANCE TELECOM, 75015 Paris (FR)
(72) Inventeur: Clerc, Fabrice, 14550 Blainville-Sur-Orne (FR)
(74) Mandataire: Joly, Jean-Jacques

(56) Documents cités:
- WO-A-01/50729
- WO-A-02/37778
- FR-A- 2 640 451
- FR-A- 2 812 155
- US-A- 5 058 152
- US-B1- 6 272 214

## Description

L'invention concerne le domaine des télécommunications et permet la mise en relation de membres d'un groupe d'utilisateurs de terminaux communicants.

Certains opérateurs proposent des services permettant à un groupe d'utilisateurs de téléphones mobiles de participer à des forums de discussion ou d'être mis en relation les uns avec les autres dans le cadre d'une activité commune. Pour accéder à de tels services, l'un des utilisateurs du groupe doit généralement réserver au préalable un espace de conversation. Les membres du groupe doivent ensuite tous composer un même numéro, ce numéro permettant de les intégrer à l'espace commun réservé.

Ces services sont généralement liés à des applications particulières : conférences, forum, etc.

Toutefois dans certaines circonstances, des utilisateurs peuvent souhaiter constituer un groupe de manière ponctuelle et provisoire. Ces utilisateurs qui se réunissent au cours d'une période de temps limitée, ne souhaitent pas divulguer leur numéro de téléphone aux autres utilisateurs du groupe. En effet, en dehors de cette période, ils n'ont aucune raison particulière de souhaiter continuer communiquer entre eux.

Ces utilisateurs peuvent par exemple participer à un rallye ouvert à tous ceux qui souhaitent s'inscrire, être invités à une noce au cours de laquelle ils doivent communiquer avec les autres invités, etc.

Or, les services proposés actuellement n'autorisent pas la mise en relation individuelle et anonyme entre des membres d'un groupe.

Par ailleurs, on connaît par le document WO 01/95600 un procédé et un dispositif permettant de mettre en relation de manière anonyme deux utilisateurs de téléphone. Selon ce procédé, un premier utilisateur souscrit à un service de mise en relation anonyme. A cette occasion, il fournit à un serveur une référence à laquelle il souhaite être contacté. Le serveur comprend une table de données dans laquelle il enregistre la référence fournie par le premier utilisateur et au moins un numéro de téléphone auquel cet utilisateur peut être joint. Le premier utilisateur souhaitant être contacté diffuse ensuite la référence. Un deuxième utilisateur souhaitant contacter le premier utilisateur se connecte au serveur en composant un numéro spécifique et communique à ce serveur la référence du premier utilisateur. Le serveur met alors en relation téléphonique le deuxième utilisateur avec le premier utilisateur en se fondant sur le numéro de téléphone auquel est associée la référence.

L'avantage de ce service est qu'il permet à un utilisateur d'être joint par l'intermédiaire du serveur sans communiquer son numéro de téléphone.

L'inconvénient de ce service est qu'il n'est pas adapté à la mise en relation de membres d'un groupe occasionnel d'utilisateurs. En effet, ce service ne permet qu'une mise en contact individuelle et impose à chaque utilisateur de mémoriser des références d'autres utilisateurs pour pouvoir les contacter.

Le document US6272214 décrit un procédé pour organiser une session de téléréunion et contrôler la participation de membres d'un groupe d'utilisateurs a celle-ci. Il est décrit un procédé de mise en relation de membres d'un groupe d'utilisateurs de terminaux communicants, dans lequel on associe au moins un identifiant unique temporaire directement a une session de téléréunion, cet identifiant unique étant envoyé a des participants potentiels a cette session de téléréunion. En composant cet identifiant personnel, l'utilisateur en question se joint a la session de téléréunion via un point d'accès désigné par l'identifiant personnel et adapté a cet utilisateur.

Le document D2 décrit un procédé de mise en relation anonyme d'un groupe d'utilisateurs de terminaux communicants, dans lequel un dispositif central appelle un membre du groupe pour établir une communication avec un autre membre ayant clique sur un lien du type <<Click-to-Dial >>.

Le document D3 décrit un procédé d'établissement d'appels téléphoniques anonymes entre deux ou plusieurs utilisateurs de téléphones mobiles, selon lequel - on enregistre dans un serveur 1 des informations associant a un numéro de téléphone d'un utilisateur, un pseudonyme - un premier utilisateur d'un téléphone mobile peut demander au serveur de le mettre directement en relation avec un deuxième utilisateur qu'il identifie par son pseudonyme. Pour identifier le deuxième utilisateur auprès du serveur, le premier utilisateur envoie au serveur le pseudonyme du deuxième utilisateur, par exemple au moyen d'un SMS destine au système. Ainsi, lorsque le premier utilisateur envoie un pseudonyme (alias), le serveur 1 met en relation ce premier utilisateur avec un deuxième utilisateur dont le numéro de téléphone mobile est associé au pseudonyme envoyé.

Un but de l'invention est de fournir un service de mise en relation de membres d'un groupe d'utilisateurs de terminaux communicants permettant de préserver l'anonymat de chacun des utilisateurs.

A cet effet, l'invention propose un procédé de mise en relation de membres d'un groupe d'utilisateurs de terminaux communicants caractérisé en ce qu'il comprend les étapes selon lesquelles :
- on enregistre dans une base de données des informations associant à un ou plusieurs numéro(s) de terminal de membre(s) du groupe, un alias temporaire,
- lorsqu'un membre du groupe compose un alias, un serveur met en relation ledit membre avec un ou plusieurs membre(s) du groupe dont le numéro de terminal est associé à l'alias composé,
dans lequel chaque alias comprend une séquence de groupe, commune à tous les membres du groupe, et une séquence personnelle identifiant de manière univoque le ou les membre(s) du groupe au(x)quel(s) l'alias est associé parmi l'ensemble des membres du groupe.

Les alias des membres d'un même groupe présentent tous une structure commune : ils comprennent une séquence de groupe et une séquence personnelle. Cette caractéristique permet une mémorisation plus facile des alias par les membres du groupe.

En outre, cette caractéristique permet d'appliquer certaines conditions à la mise en relation entre des utilisateurs de terminaux communicants par le service de mise en relation : par exemple, le serveur peut mettre en relation des utilisateurs à condition que ceux-ci fassent partie d'un même groupe. A cet effet, il vérifie au préalable que l'alias d'un utilisateur souhaitant entrer en communication avec un membre d'un groupe et l'alias du membre comprennent bien la même séquence de groupe.

Enfin, contrairement au procédé de mise en relation proposé par le document WO 01/95600, le procédé de l'invention n'inclut pas nécessairement une diffusion préalable sur un support accessible au public ou de publication des numéros alias des utilisateurs.

Avec la structure d'alias proposée par l'invention, l'étape selon laquelle un membre du groupe compose un alias peut éventuellement être réalisée en deux temps : dans un premier temps, l'utilisateur compose la séquence de groupe, le réseau reconnaît cette séquence et met en relation l'utilisateur avec le serveur, et dans un deuxième temps, de manière spontanée ou sur invitation du serveur, l'utilisateur compose la séquence personnelle identifiant le ou les membre(s) du groupe avec qui il souhaite communiquer.

Dans une mise en oeuvre de l'invention, le procédé comprend les étapes selon lesquelles :
- l'un des membres du groupe se connecte au préalable via un réseau de communication au serveur qui lui attribue une séquence de groupe et une séquence personnelle,
- le membre du groupe communique la séquence de groupe aux autres membres du groupe,
- les autres membres composent la séquence de groupe,
- le réseau établit des communications entre les utilisateurs et le serveur,
- le serveur attribue à chaque utilisateur un alias comprenant la séquence de groupe et une séquence personnelle.

Selon cette mise en oeuvre, l'un des utilisateurs prend l'initiative de rassembler un groupe temporaire d'utilisateurs. Il choisi les membres de ce groupe temporaire en leur communiquant la séquence de groupe que le serveur lui a attribué.

De manière avantageuse, lorsqu'un membre du groupe compose un alias associé à un ou plusieurs autre(s) membre(s) du groupe, le serveur établit une communication entre le membre appelant et le ou les membre(s) associé(s) à l'alias composé.

De manière avantageuse également, le serveur vérifie au préalable que le membre appelant et le ou les membre(s) appelé(s) font partie d'un même groupe en comparant les séquences de groupe de leurs alias.

Selon une caractéristique préférée de l'invention, une séquence de groupe comprend au plus 5 caractères.

Cette caractéristique est destinée à faciliter la mémorisation de la séquence de groupe par les membres du groupe et à faciliter les manipulations nécessaires pour une mise en relation entre membre(s).

Selon une autre caractéristique préférée de l'invention, une séquence personnelle comprend au plus 2 caractères.

De manière préférentielle également, un alias est un numéro.

L'invention propose également un dispositif de mise en relation de membres d'un groupe d'utilisateurs de terminaux communicants caractérisé en ce qu'il comprend :
- une base de données apte à contenir des informations associant à un ou plusieurs numéro(s) de terminal de membre(s) du groupe, un alias temporaire,
- un serveur connecté à un réseau de communication apte lorsqu'un membre du groupe compose un alias, à mettre en relation le membre avec un ou plusieurs membre(s) du groupe dont le numéro de terminal est associé à l'alias composé,
dans lequel chaque alias comprend une séquence de groupe, commune à tous les membres du groupe, et une séquence personnelle, identifiant de manière univoque le ou les membre(s) du groupe au(x)quel(s) l'alias est associé parmi l'ensemble des membres du groupe.

D'autres caractéristiques et avantages ressortiront encore de la description qui suit, laquelle est purement illustrative et non limitative et doit être lue en regard des figures annexées parmi lesquelles :
- la figure 1 représente un exemple de dispositif de mise en relation conforme à un mode de réalisation de l'invention dans lequel les terminaux communicants sont des téléphones mobiles,
- la figure 2 représente des exemples d'alias pouvant être utilisés dans le cadre de l'invention.

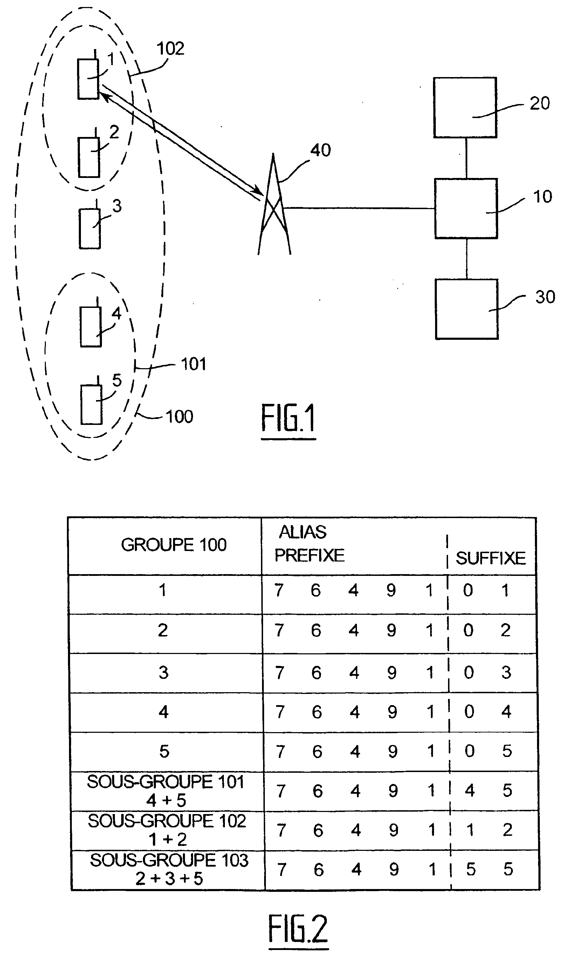

Le dispositif de mise en relation représenté à la figure 1 comprend un serveur de mise en relation 10 connecté à un réseau de téléphonie mobile 40. Le serveur de mise en relation 10 est par ailleurs relié à une base de données 20 et à une plate-forme de reconnaissance/synthèse vocale 30.

Un groupe 100 d'utilisateur 1, 2, 3, 4, 5... de téléphones mobiles souhaite utiliser le service le mise en relation proposé par l'opérateur du réseau 40.

L'un des membres 1 du groupe 100 compose un numéro de téléphone fourni par l'opérateur du réseau 40 et permettant d'accéder au service. Le réseau 40 établit alors une communication entre l'utilisateur 1 et le serveur 10.

Le serveur 10 identifie le numéro du téléphone mobile du membre 1 et lui attribue un numéro alias. Ce numéro alias comprend un préfixe « de groupe » à cinq chiffres ainsi qu'un suffixe « personnel » à deux chiffres. Le serveur 10 communique au membre 1 le préfixe de groupe ainsi que son suffixe personnel.

Le serveur 10 peut par exemple communiquer le préfixe et le suffixe en envoyant au téléphone mobile de l'utilisateur 1 un message textuel (SMS) ou un message vocal. Dans ce dernier cas, le serveur 10 commande la plate-forme de reconnaissance/synthèse vocale 30 pour qu'elle génère un message vocal.

En parallèle, le serveur 10 enregistre dans la base de données 20 des informations associant au numéro de téléphone du membre 1 le numéro alias qu'il vient de lui attribuer.

Après qu'il ait pris connaissance de son numéro alias, l'utilisateur 1 peut constituer un groupe. A cet effet, il indique à l'ensemble des membres du groupe 100 le préfixe de groupe attribué par le serveur 10. Il peut également indiquer aux membres du groupe son suffixe personnel.

Les membres 2, 3, 4, 5... du groupe 100 composent sur leur téléphone mobile les cinq chiffres correspondant au préfixe de groupe. Le réseau 40 reconnaît qu'il s'agit d'un préfixe et établit des communications entre le serveur 10 et les téléphones mobiles des membres 2, 3, 4, 5... Le serveur 10 attribue alors à chaque membre un suffixe personnel l'identifiant de manière univoque parmi les membres du groupe.

Le serveur 10 peut par exemple attribuer les suffixes par ordre de connexion des utilisateurs 2, 3, 4, 5... Les membres 1, 2, 3, 4, 5 du groupe 100 peuvent par la suite s'échanger leurs suffixes respectifs.

En parallèle, le serveur 10 enregistre dans la base de données 20 des informations associant chaque numéro de téléphone d'un membre du groupe à son numéro alias.

Le membre initialisateur 1 qui a ouvert le service peut décider de clore l'enregistrement des utilisateurs dans le groupe 100. A cet effet, il se connecte au serveur 10, par exemple en composant son propre numéro alias et indique au serveur qu'il souhaite clore les enregistrements.

Le serveur 10 envoie à chacun des membres 1, 2, 3, 4, 5... du groupe 100, via le réseau 40, un fichier de données contenant tous les numéros alias des membres du groupe 100. Le fichier est téléchargé automatiquement dans chacun des téléphones mobiles des membres du groupe 100.

La figure 2 représente la liste des numéros alias associés aux membres 1, 2, 3, 4, 5 du groupe 100.

Une fois que chaque membre 1, 2, 3, 4, 5... possède un numéro alias, les membres peuvent entrer en contact les uns avec les autres en composant le numéro alias du membre qu'ils souhaitent joindre.

Par exemple, si l'utilisateur 1 souhaite joindre l'utilisateur 4, il compose le numéro alias associé à ce dernier, soit 7649104. Le réseau 40 reconnaît les cinq premiers chiffres du numéro comme étant un préfixe de groupe d'un alias et établit une communication entre le serveur 10 et le téléphone mobile du membre 1.

Le serveur 10 vérifie que l'utilisateur 1 appelant fait bien partie du même groupe que l'utilisateur 4 qu'il essaie de contacter. A cet effet, il recherche dans la base de données 20 le numéro alias associé au numéro de l'utilisateur 1 appelant. Il compare ensuite les préfixes des numéros alias associés aux deux utilisateurs 1 et 4. Lorsqu'il a établit que les deux préfixes étaient similaires, il recherche dans la base de données 20 le numéro de téléphone associé au numéro alias de l'utilisateur 4. Il établit ensuite une communication entre l'utilisateur 1 et l'utilisateur 4.

Le serveur 10 peut également attribuer un numéro alias à un sous-groupe 101 ou 102 d'utilisateurs du groupe 100. Un tel sous-groupe peut comprendre autant d'utilisateurs que souhaité.

Ainsi qu'illustré sur la figure 2, le sous-groupe 102 d'utilisateurs comprend les utilisateurs 1 et 2. Le numéro alias de ce sous-groupe 101 comprend un préfixe associé au groupe 100 ainsi qu'un suffixe associé au sous-groupe 102.

Ainsi, l'un des utilisateurs du groupe 100 peut contacter plusieurs utilisateurs d'un sous-groupe en composant le numéro alias associé à ce sous-groupe. Les utilisateurs appelants et appelés accèdent à un espace commun de discussion permettant la participation d'autant d'utilisateurs que souhaité.

Le service de mise en relation permet également à l'un des utilisateurs du groupe 100 d'envoyer des messages (SMS, MMS, email) à un ou plusieurs utilisateurs du groupe 100 par l'intermédiaire du serveur 10.

Dans une mise en oeuvre de l'invention, le serveur 10 est apte à diffuser à tous les utilisateurs d'un même groupe les suffixes de chacun de ses membres ou sous-groupes. Par exemple, le serveur 10 envoie un message textuel (SMS) à tous les membres du groupe.

Le serveur 10 peut également comprendre une aide en ligne. Lorsqu'un membre du groupe 100 se connecte au serveur en composant le préfixe de son groupe, le serveur 10 lui propose l'aide en ligne. Cette aide en ligne indique au membre les numéros alias d'autres membres du groupe. Les informations peuvent être communiquées par l'envoi d'un message textuel ou par message vocal. Le membre du groupe reçoit un message du type : « Tapez 01 pour appeler Philippe, tapez 02 pour appeler Marianne, etc. ».

L'utilisateur initialisateur 1 qui a ouvert le service de mise en relation est également apte à fermer la session d'utilisation du service. A cet effet, il se connecte au serveur 10 en composant son propre numéro alias et indique au serveur qu'il souhaite fermer la session.

Le serveur 10 peut alors supprimer dans la base de données 20 les informations incluant les numéros alias des utilisateurs du groupe 100. A partir de cet instant, aucun des membres du groupe 100 ne peut plus appeler un autre membre sans avoir obtenu son numéro de téléphone permanent.

Alternativement, lorsque l'utilisateur 1 se connecte au serveur 10 pour accéder au service de mise en relation, il peut spécifier au serveur une durée de validité de la session. A l'expiration de cette durée, la session d'utilisation du service de mise en relation est automatiquement fermée par le serveur 10.

Le service de mise en relation précédemment décrit permet une allocation dynamique de numéros alias par le serveur 10. En effet, le serveur 10 crée, supprime ou ré-attribue des numéros alias au gré des formations et des disparitions de groupes d'utilisateurs, contrairement au dispositif décrit dans le document WO 01/95600 où une référence était attribuée à un utilisateur de manière statique et ne pouvait être créée ou supprimée qu'au prix de procédures relativement complexes.

En outre, le procédé de mise en relation de l'invention n'impose pas à chaque utilisateur d'un groupe d'effectuer une procédure d'initialisation de mise en relation. Le procédé proposé ne nécessite que l'intervention d'un initiateur de mise en relation parmi les membres du groupe.

L'invention a été décrite dans le cadre de mise en relation d'utilisateurs d'un réseau de téléphonie mobile. Elle est bien-entendu applicable à tout type de réseau de communication tels que les réseaux de téléphonie fixe ou les réseaux satellite.

## Revendications

1. Procédé de mise en relation de membres d'un groupe (100) d'utilisateurs (1, 2, 3, 4, 5) de terminaux communicants **caractérisé en ce qu'**il comprend les étapes selon lesquelles :
- on enregistre dans une base de données (20) des informations associant à un ou plusieurs numéro(s) de terminal de membre(s) (1, 2, 3, 4, 5) du groupe (100), un alias temporaire,
- lorsqu'un membre (1, 2, 3, 4, 5) du groupe (100) compose un alias, un serveur (10) met en relation ledit membre avec un ou plusieurs membre(s) (1, 2, 3, 4, 5) du groupe (100) dont le numéro de terminal est associé à l'alias composé,
le procédé étant **caractérisé en ce que** chaque alias comprend une séquence de groupe, commune à tous les membres du groupe, et une séquence personnelle identifiant de manière univoque le ou les membre(s) du groupe au(x)quel(s) l'alias est associé parmi l'ensemble des membres du groupe.

2. Procédé selon la revendication 1, **caractérisé en ce qu'**il comprend les étapes selon lesquelles :
- l'un (1) des membres du groupe (100) se connecte au préalable via un réseau de communication (40) au serveur (10) qui lui attribue une séquence de groupe et une séquence personnelle,
- le membre (1) du groupe (100) communique la séquence de groupe aux autres membres du groupe (100),
- les autres membres (2, 3, 4, 5) composent la séquence de groupe,
- le réseau (40) établit des communications entre les utilisateurs (2, 3, 4, 5) et le serveur (10),
- le serveur (10) attribue à chaque utilisateur (2, 3, 4, 5) un alias comprenant la séquence de groupe et une séquence personnelle.

3. Procédé selon l'une des revendications 1 ou 2, **caractérisé en ce que** lorsqu'un membre du groupe compose un alias associé à un ou plusieurs autre(s) membre(s) du groupe, le serveur (10) établit une communication entre le membre appelant et le ou les membre(s) associé(s) à l'alias composé.

4. Procédé selon la revendication 3, **caractérisé en ce que** le serveur (10) vérifie au préalable que le membre appelant et le ou les membre(s) appelé(s) font partie d'un même groupe (100) en comparant les séquences de groupe de leurs alias.

5. Procédé selon l'une des revendications qui précèdent, **caractérisé en ce qu'**une séquence de groupe comprend au plus 5 caractères.

6. Procédé selon l'une des revendications qui précèdent, **caractérisé en ce qu'**une séquence personnelle comprend au plus 2 caractères.

7. Procédé selon l'une des revendications qui précèdent, **caractérisé en ce qu'**un alias est un numéro.

8. Procédé selon l'une des revendications qui précèdent, **caractérisé en ce que** les terminaux communicants sont des téléphones mobiles.

9. Dispositif de mise en relation de membres d'un groupe (100) d'utilisateurs (1, 2, 3, 4, 5) de terminaux communicants **caractérisé en ce qu'**il comprend :
- une base de données (20) apte à contenir des informations associant à un ou plusieurs numéro(s) de terminal de membre(s) (1, 2, 3, 4, 5) du groupe (100), un alias temporaire,
- un serveur (10) connecté à un réseau de communication (40) apte lorsqu'un membre (1, 2, 3, 4, 5) du groupe (100) compose un alias, à mettre en relation le membre avec un ou plusieurs membre(s) (1, 2, 3, 4, 5) du groupe (100) dont le numéro de terminal est associé à l'alias composé,
le dispositif étant **caractérisé en ce que** chaque alias comprend une séquence de groupe, commune à tous les membres du groupe, et une séquence personnelle, identifiant de manière univoque le ou les membre(s) du groupe au(x)quel(s) l'alias est associé parmi l'ensemble des membres du groupe.

10. Dispositif selon la revendication 9, **caractérisé en ce que** les terminaux communicants sont des téléphones mobiles.

## Claims

1. Method of connecting members of a group (100) of users (1,2,3,4,5) of communicating terminals, **characterized in that** it comprises the steps according to which:
- information associating a temporary alias with one or more terminal number(s) of member(s) (1,2,3,4,5) of the group (100) is recorded in a database (20),
- when a member (1,2,3,4,5) of the group (100) dials an alias, a server (10) connects the said member with one or more member (s) (1,2,3,4,5) of the group (100) whose terminal number is associated with the alias dialled,
the method being **characterized in that** each alias comprises a group sequence, common to all the members of the group, and a personal sequence identifying in a one-to-one manner the member or members of the group with which the alias is associated from among the set of members of the group.

2. Method according to Claim 1, **characterized in that** it comprises the steps according to which:
- one (1) of the members of the group (100) connects beforehand via a communication network (40) to the server (10) which allocates it a group sequence and a personal sequence,
- the member (1) of the group (100) communicates the group sequence to the other members of the group (100),
- the other members (2,3,4,5) dial the group sequence,
- the network (40) establishes communications between the users (2,3,4,5) and the server (10),
- the server (10) allocates each user (2,3,4,5) an alias comprising the group sequence and a personal sequence.

3. Method according to one of Claims 1 or 2, **characterized in that** when a member of the group dials an alias associated with one or more other member(s) of the group, the server (10) establishes a communication between the calling member and the member or members associated with the alias dialled.

4. Method according to Claim 3, **characterized in that** the server (10) verifies beforehand that the calling member and the called member or members form part of one and the same group (100) by comparing the group sequences of their aliases.

5. Method according to one of the claims which precede, **characterized in that** a group sequence comprises at most 5 characters.

6. Method according to one of the claims which precede, **characterized in that** a personal sequence comprises at most 2 characters.

7. Method according to one of the claims which precede, **characterized in that** an alias is a number.

8. Method according to one of the claims which precede, **characterized in that** the communicating terminals are mobile telephones.

9. Device for connecting members of a group (100) of users (1,2, 2, 3, 4, 5) of communicating terminals, **characterized in that** it comprises:
- a database (20) able to contain information associating a temporary alias with one or more terminal number(s) of member(s) (1,2,3,4,5) of the group (100),
- a server (10) connected to a communication network (40) able when a member (1,2,3,4,5) of the group (100) dials an alias, to connect the member with one or more member (s) (1,2,3,4,5) of the group (100) whose terminal number is associated with the alias dialled,
the device being **characterized in that** each alias comprises a group sequence, common to all the members of the group, and a personal sequence, identifying in a one-to-one manner the member or members of the group with which the alias is associated from among the set of members of the group.

10. Device according to Claim 9, **characterized in that** the communicating terminals are mobile telephones.

## Patentansprüche

1. Verfahren zum Verbinden von Teilnehmern einer Gruppe (100) von Kommunikationsendgerätebenutzern (1, 2, 3, 4, 5), **dadurch gekennzeichnet, dass** es die Schritte aufweist, gemäß welchen:
- man in einer Datenbank (20) Informationen speichert, die mit einer oder mehreren Nummer(n) von Teilnehmerendgeräten (1, 2, 3, 4, 5) der Gruppe (100) einen zeitweiligen Aliasnamen verbinden,
- wenn ein Teilnehmer (1, 2, 3, 4, 5) der Gruppe (100) einen Aliasnamen wählt, ein Server (10) den Teilnehmer mit einem oder mehreren Teilnehmern (1, 2, 3, 4, 5) der Gruppe (100) verbindet, dessen/deren Endgerätnummer mit dem gewählten Aliasnamen verbunden ist,
wobei das Verfahren **dadurch gekennzeichnet ist, dass** jeder Aliasname eine Gruppensequenz aufweist, die für alle Teilnehmer der Gruppe gemeinsam ist, und eine persönliche Sequenz, die eindeutig den oder die Teilnehmer der Gruppe identifiziert, mit welchem/welchen der Aliasname in der Einheit der Teilnehmer der Gruppe verbunden ist.

2. Verfahren nach Anspruch 1, **dadurch gekennzeichnet, dass** es die Schritte aufweist, gemäß welchen:
- sich einer (1) der Teilnehmer der Gruppe (100) vorab über ein Kommunikationsnetz (40) mit dem Server (10) verbindet, der ihm eine Gruppensequenz und eine persönliche Sequenz zuweist,
- der Teilnehmer (1) der Gruppe (100) die Gruppensequenz den anderen Teilnehmern der Gruppe (100) mitteilt,
- die anderen Teilnehmer der Gruppe (2, 3, 4, 5) die Gruppensequenz wählen,
- das Netz (40) die Kommunikationen zwischen den Teilnehmern (2, 3, 4, 5) und dem Server (10) aufbaut,
- der Server (10) jedem Teilnehmer (2, 3, 4, 5) einen Aliasnamen zuweist, der die Gruppensequenz und eine persönliche Sequenz aufweist.

3. Verfahren nach einem der Ansprüche 1 oder 2, **dadurch gekennzeichnet, dass** der Server (10), wenn einer der Teilnehmer der Gruppe einen Aliasnamen, der mit einem oder mehreren anderen Teilnehmern der Gruppe verbunden ist, wählt, eine Kommunikation zwischen dem anrufenden Teilnehmer und dem oder den Teilnehmern, die mit dem gewählten Aliasnamen verbunden sind, aufbaut.

4. Verfahren nach Anspruch 3, **dadurch gekennzeichnet, dass** der Server (10) vorab prüft, ob der anrufende Teilnehmer und der oder die angerufenen Teilnehmer zu einer gleichen Gruppe (100) gehören, indem er die Gruppensequenzen ihrer Aliasnamen vergleicht.

5. Verfahren nach einem der vorhergehenden Ansprüche, **dadurch gekennzeichnet, dass** eine Gruppensequenz aus maximal 5 Zeichen besteht.

6. Verfahren nach einem der vorhergehenden Ansprüche, **dadurch gekennzeichnet, dass** eine persönliche Sequenz maximal 2 Zeichen aufweist.

7. Verfahren nach einem der vorhergehenden Ansprüche, **dadurch gekennzeichnet, dass** ein Aliasname eine Nummer ist.

8. Verfahren nach einem der vorhergehenden Ansprüche, **dadurch gekennzeichnet, dass** die kommunizierenden Endgeräte Mobiltelefone sind.

9. Vorrichtung zum Verbinden von Teilnehmern einer Gruppe (100) von Kommunikationsendgerätebenutzern (1, 2, 3, 4, 5), **dadurch gekennzeichnet, dass** sie Folgendes aufweist:
- eine Datenbank (20), die Informationen enthalten kann, die mit einer oder mehreren Nummern von Teilnehmerendgeräten (1, 2, 3, 4, 5) der Gruppe (100) einen zeitweiligen Aliasnamen verbinden,
- einen Server (10), der an ein Kommunikationsnetz (40) angeschlossen ist, der, wenn ein Teilnehmer (1, 2, 3, 4, 5) der Gruppe (100) einen Aliasnamen wählt, den Teilnehmer mit einem oder mehreren Teilnehmern (1, 2, 3, 4, 5) der Gruppe (100), dessen Endgerätnummer mit dem eingegebenen Aliasnamen verbunden ist, verbinden kann,
wobei die Vorrichtung **dadurch gekennzeichnet ist, dass** jeder Aliasname eine Gruppensequenz aufweist, die für alle Teilnehmer der Gruppe gemeinsam ist, und eine persönliche Sequenz, die eindeutig den oder die Teilnehmer der Gruppe, mit welchem/welchen der Aliasname verbunden ist, in der Einheit der Teilnehmer der Gruppe identifiziert.

10. Vorrichtung nach Anspruch 9, **dadurch gekennzeichnet, dass** die kommunizierenden Endgeräte Mobiltelefone sind.
